Europäisches Patentamt

European Patent Office

Office européen des brevets

(19)

(11) Publication number: **0 107 196**

**B1**

(12)

# EUROPEAN PATENT SPECIFICATION

(45) Date of publication of patent specification: **17.08.88**

(51) Int. Cl.⁴: **G 06 K 9/22**

(21) Application number: **83110547.3**

(22) Date of filing: **21.10.83**

(54) Character recognition apparatus.

(30) Priority: **21.10.82 JP 185839/82**

(43) Date of publication of application:
**02.05.84 Bulletin 84/18**

(45) Publication of the grant of the patent:
**17.08.88 Bulletin 88/33**

(84) Designated Contracting States:
**CH DE FR GB IT LI SE**

(56) References cited:
**DE-A-1 774 572**
**DE-A-2 446 585**
**DE-B-2 303 841**
**US-A-3 133 266**

(73) Proprietor: **SUMITOMO ELECTRIC INDUSTRIES LIMITED**
**No. 15, Kitahama 5-chome Higashi-ku**
**Osaka-shi Osaka 541 (JP)**

(72) Inventor: **Satoh, Koji Sumitomo Electric Industries, Ltd.**
**1-3, Shimaya 1-chome**
**Konohana-ku Osaka (JP)**
Inventor: **Ooka, Akihiro Sumitomo Electric Industries, Ltd.**
**1-3, Shimaya 1-chome**
**Konohana-ku Osaka (JP)**
Inventor: **Wada, Yutaka Sumitomo Electric Industries, Ltd.**
**1-3, Shimaya 1-chome**
**Konohana-ku Osaka (JP)**

(74) Representative: **Kuhnen, Wacker & Partner**
**Schneggstrasse 3-5 Postfach 1729**
**D-8050 Freising (DE)**

Courier Press, Leamington Spa, England.

## Description

This invention refers to an apparatus for recognizing hand-written character(s), number(s), and marks in real time on a tablet, according to the opening part of claim 1.

An attempt to recognize hand-written character(s) on a tablet has been made by processing the pattern-related information on data of the character(s) according to the steps specified by a software program for their recognition. There are some disadvantages inherent to utilizing a complicated computer software program for pattern recognition, such as long recognition time which restricts its applications for online usage.

Instead of processing the character pattern according to a length program-list of computer, a hand-written character can be recognized through comparison by classifying some typical elements of the character followed by referring them to a table of the elements for known characters. The above method for character recognition is widely used. When the elements of the character are represented by the typical elements composed by combination of straight lines with relatively high degree of accuracy.

From DE—A—1 774 572 it is known to recognise characters by identifying the strokes of which they are composed.

The present invention as set forth in claim 1 pertains to an apparatus for recognizing a character, numeral, or mark (hereafter described as a character) in real time as the character is written by a stylus pen on a surface of a tablet which is provided with a pen-position detection means.

During the movement of the pen, initiation and completion of a stroke of a character is detected when the vertical position of the pen, which is expressed as Z-coordinate, has shifted. The end of writing a character is also detected either when the pen has moved far beyond the distance of the normalizing size of the character or when the passage of time between the occurrence of the two adjacent discontinuities of the Z-coordinates exceeds a preset value.

The length (L) and the gradient ($\theta$) of a segment line of a stroke can be determined by processing X and Y coordinates of the start and end point of the relevant segment line. They are classified into plural categories and designation codes are allotted to each of the line length and gradient.

The identity of a stroke is then decided according to the order of the occurrence of the codes of the segment line. A character can be recognized by looking up a preset transition table of the identity codes of strokes according to their occurrence.

In the following a preferred embodiment of the invention is described in more detail with reference to the accompanying drawings:

Fig. 1 shows a block diagram of the character recognition apparatus of the present invention;
Fig. 2 illustrates classified codes for each line direction of a stroke of a character to be recognized in accordance with the present invention;
Fig. 3 shows strokes of the written character;
Fig. 4 shows the steps for characteristics of lines and strokes of the present invention; and
Fig. 5 illustrates transition of the characteristics codes of the strokes of the present invention.

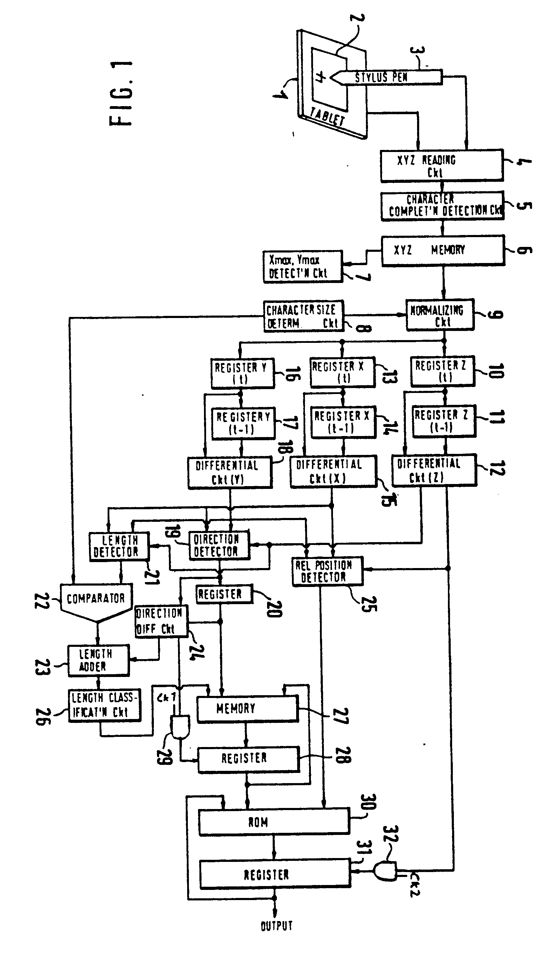

The preferred embodiments of the present invention are described hereunder by using Figure 1.

A character, a numeral or a mark (hereafter described as a character) is described on a sheet of paper 2, which is located on a tablet 1, by a stylus pen 3. The initial position of the pen 3 is detected on the three coordinates X, Y and Z of the tablet 1. The tablet for the purpose can be supplied for instance by Daini-seikosha as type DT-4000, but is not limited to the above when the same functions are furnished to the products.

Distinction between consecutively written two characters is detected by a character completion detection circuit 5. A coordinate memory 6 memorizes positions of the stylus pen on the three coordinates X, Y and Z from the time when the pen 3 touches the paper 2 (Z=1) to the time when it is lifted from the surface of the paper 2 (Z=0). Then a character has been written when the following pen position is located beyond a predetermined distance on either coordinate X or coordinate Y on the paper 2 (Z=1). For instance a character has been written when the pen 3 has been shifted to the position with a distance of 20 mm on either coordinate X or coordinate Y from the former position where the character size is 10 mm×10 mm.

Minimum and maximum among the X, Y coordinates are detected by a circuit 7, who extracts them for each of one character, respectively, by reading out memory 6. A character-size determining circuit 8 calculates the difference between maximum X-value (Xmax) and minimum X-value (Xmin) as A, and the difference between maximum Y-value (Ymax) and minimum Y-value (Ymin) as B.

Therefore

$$A = Xmax - Xmin \qquad (1)$$

$$B = Ymax - Ymin \qquad (2)$$

and the size of the character is represented as A×B, each corresponding to the position on the coordinates of X and Y.

A normalizing circuit 9 normalizes the size of written character by transformation of the coordinates X and Y. For instance a written character can be normalized into the size of C×C corresponding to each of X and Y coordinate axes by the following equations:

$$X' = C \; (X_t - Xmin)/A \qquad (3)$$

$$Y' = C \; (Y_t - Ymin)/B \qquad (4)$$

where $X'_t$, $Y'_t$, shows transformed coordinates

and written original position is expressed by $X_t$ and $Y_t$ on the two coordinate axes X and Y.

Therefore, a written character is normalized in size even when character size varies time to time and by doing so the whole absolute coordinates related to one character in the memory 6 are transformed to a relative value.

It should be mentioned here that normalisation as such is known from e.g. US—A—3 133 266.

A Z-coordinate register 10, a X-coordinate register 13 and a Y-coordinate register 16 stock the normalized or transformed values concerning the above three coordinates. The above mentioned three registers 10, 13 and 16 send their contents, that is the normalized coordinates at the time t−1, to three registers 11, 14 and 17, respectively, just before they receive the normalized coordinates at the time of t.

A Z-coordinate differential circuit 12 determines whether pen position has been changed in terms of Z-coordinate by checking the contents of Z-coordinates registers 10 and 11.

The circuit detects, for instance, whether shift of Z-coordinate from Z=1 to Z=0, from Z=0 to Z=1 appears or Z-coordinate is still unchanged.

A X-coordinate differential circuit 15 determines the change $a$ of X-coordinates between two points in a character and $a$ is given by the equation (5):

$$a=X'_t-X'_{t-1} \qquad (5)$$

where $X'_t$ is the content of the register 13, and $X'_{t-1}$ is that of the register 14.

Similarly, a Y-coordinate differential circuit 18 determines the change b of Y-coordinates between the points as expressed by the equation (6):

$$b=Y'_t-Y'_{t-1} \qquad (6)$$

where $Y'_t$ is the content of the register 16, and $Y'_{t-1}$ is that of the register 17.

A line direction detecting circuit 19 determines the line direction between two adjacent positions in one stroke of a character, that is, decides direction of movement of the pen 3 and gradient θ is determined by equation (7):

$$\tan\ \theta=b/a \qquad (7)$$

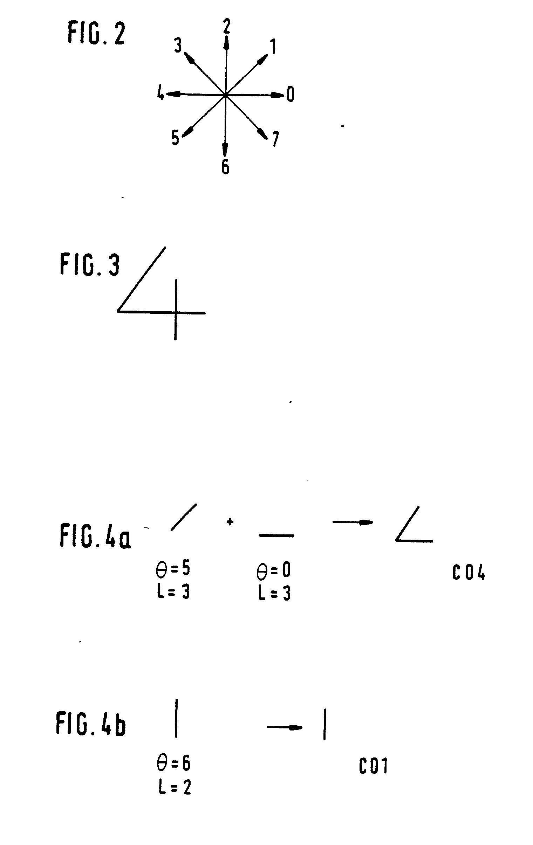

For the purpose of simplifying steps of recognition, θ can be classified, for instance, into eight consecutive codes as in Fig. 2.

As it is understood by the above description, more precise classification into such as 16 classes, and 32 classes can be adopted instead of using 8 classes, when more detailed line directions are required.

The coded signal of line direction is sent from circuit 19 to a register 20 and the register 20 delivers its content to a line direction differential circuit 24 before its receipt of the information about θ and thus changes of θ can be observed.

The line length detector 21 calculates line length L as defined in equation (8):

$$L=\sqrt{a^2+b^2} \qquad (8)$$

A comparator 22 neglects movement of pen 3 when L is less than a predetermined value E, which is decided by the normalized size of the character C. In this case Z-coordinate register 11, X-coordinate register 14 and Y-coordinate register 17 are kept unchanged and the normalized X, Y and Z coordinates observed at next time of line position sampling are sent to the registers 10 (Z-coordinate), 13 (X-coordinate) and 16 (Y-coordinate). When L is larger than the predetermined value of E, the line length information L is forwarded to a length adder 23. The line direction differential has become changed through comparing the data provided by the line direction detecting circuit 19 with register value of θ in the line direction register 20. When θ is found to be unchanged, a signal is sent to the length adder 23, so that line length L be added.

When change of θ is observed, the data θ is delivered to the line length adder 23 and from there the added length data is sent to a line length classifying circuit 26 while line length data L is delivered from the comparator 22 to the length adder 23. Therefore, sum of the line length is obtained for the same line direction θ until a different value θ is found.

The line length classifying circuit 26 classifies line length data L from length adder 23 into plural categories. For instance, a quarter of the normalized character size C will become a measure of such categories.

The process of extracting identity of a stroke of a character is described. A stroke of a character begins when stylus pen 3 touches the paper 2 (Z=1) and continues until it leaves the surface of the paper 2 (Z=0). Circuitries for extracting the identity of a stroke are composed of a stroke characteristics memory 27 and a register 28. The output signals from the line direction register 20, line length classifying circuit 26, and the register 28 are sent to the stroke characteristics memory 27.

These output signals are set into the register 28 in accordance with an output timing of a signal circuit 29 which is the AND-Gate of the clock signal CK1 and line direction differential circuit 24.

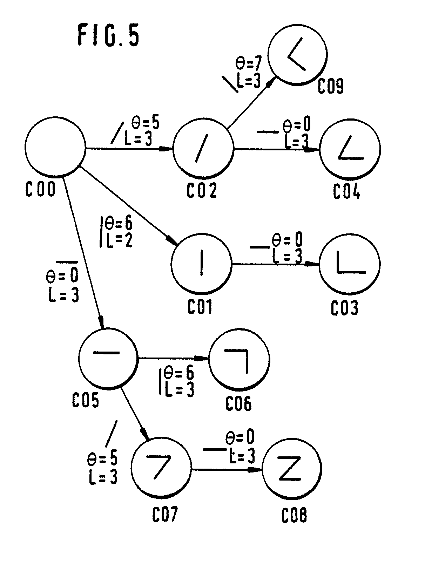

It should be understood that a stroke distinction signal is outputted when the line direction changes. Moreover as the data in the register 28 is outputted from memory 27, changes of line direction is set in the register 28 and the register 28 is cleared after its content has been forwarded to a read only memory 30. The above process is exemplified in the case where "4" is written by the stylus pen 3 as illustrated in Fig. 4.

The line direction θ is classified into 8 categories as shown in Fig. 2. The line length L is also classified into 4 categories such as 0, 1, 2 and 3 according to the normalizing character size C. They are:

| Length code | Absolute line length |
|---|---|
| 0 | $L \leq 0.25C$ |
| 1 | $0.25C < L \leq 0.5C$ |
| 2 | $0.5C < L \leq 0.75C$ |
| 3 | $0.75C < L$ |

In the initial stroke L in Fig. 4(a), the first straight line has gradient code $\theta=5$, and length code $L=3$; and the second line has codes of $\theta=0$, and $L=3$. The second stroke of "4" is shown in Fig. 4(b) as only one stroke with one straight line with code designation $\theta=6$ and $L=2$.

In Fig. 5 stats of transition for extracting identities of strokes are illustrated. For instance, starting from the initial stage or C00, identity C02 is registered in register 28 when a line with codes of $\theta=5$ and $L=3$ is encountered. The second identity C04 is registered in register 28 and the final identity of that stroke is decided as C04, if Z becomes zero before the third identity appears. As described previously, the second stroke of "4" (refer to Fig. 4(b)) is one straight line with designation codes $\theta=6$ and $L=2$ and the identity code for the second stroke of "4" is C01.

The character recognition is processed by means of read only memory 30 and a register 31. The output signal of the Z-coordinate, which is generated upon change of Z-coordinate from 1 to 0, and a clock signal CK2 are applied to an AND-Gate 32. In the example described in Fig. 3, where figure "4" is written by stylus pen 3, the first stroke is distinguished as the identity C04 and the code is inputted into the ROM 30 and is set in the register 31.

Then the second stroke identity C01 and the first read out data, which is now in the register 31, are combined. The result of the above combination of the two identities of strokes of the figure "4", that is the combination of C01 and C04, is inputted to the ROM 30 and this gives the final recognition of the character as "4". In the above description of the present invention the character completion detection circuit 5 detects completion of one character when X and Y coordinates deviate beyond a predetermined value E under condition of $Z=1$. The completion of a character can also be detected by such means a measuring passage of time when the state of $Z=0$ is maintained. By this alternative, the completion of a character is detected when the duration for $Z=0$ exceeds a pre-determined time.

The normalization of character size can be also achieved by normalizing length of segment lines of strokes of a character after calculating both length and directions of lines, instead of calculating them (length and directions) after transforming coordinates of lines. The process of extraction of the identity of a stroke, and of the following recognition of the character based on the extracted identity, can be modified so as to accomplish the same object by processing all data on the directions and length of segment lines of the stroke(s) within one complete character after they have been stored in the memory. The procedure(s) of extraction of character identity and/or character recognition can be accomplished by a micro-computer or some specific electronic devices other than the combination of a ROM and a register in the previous description. According to the character recognition apparatus of the present invention, real-time-recognition of character is achieved without utilizing a complicated computer program.

1    tablet
2    writing paper
3    stylus pen
4    coordinates X, Y and Z reading circuit
5    character completion detection circuit
6    memory for coordinates X, Y and Z
7    maximum and minimum detecting circuits for X and Y
8    character-size determining circuit
9    character-size normalizing circuit
10   Z-coordinate register (t)
11   Z-coordinate register (t−1)
12   Z-coordinate differential circuit
13   X-coordinate register (t)
14   X-coordinate register (t−1)
15   X-coordinate differential circuit
16   Y-coordinate register (t)
17   Y-coordinate register (t−1)
18   Y-coordinate differential circuit
19   line direction detecting circuit
20   line direction register
21   line length detector
22   comparator
23   length adder
24   line direction differential circuit
25   relative position detection circuit
26   line length classifying circuit
27   stroke characteristics memory
28   register
29   AND-Gate
30   Read-Only-Memory (ROM)
31   register
32   AND-Gate

**Claims**

1. A character recognition apparatus in which a character, numeral or mark, hereafter described as a character, is recognized by detecting the position of a stylus pen for writing on a tablet, said pen having position-detecting means, in terms of three coordinate axes of X, Y and Z comprising:

detection circuit means (5, 6, 7) for detecting the initiation and completion of the movement of said pen (3) for writing one character by detecting change of the position of said pen (3) on the vertical coordinate Z-axis to the surface of said tablet (1) and by comparing the separation in the X—Y plane or the elapsed time associated with successive changes in position on the Z-axis with threshold values;

character size normalizing circuit means (9) for making sizes of written characters uniform by processing data on the pen positions on the plane (X and Y plane) according to the following equations:

$$X'=C\ (Xt-Xmin)/A \qquad (1)$$

$$Y'=C\ (Yt-Ymin)/B \qquad (2)$$

where A is the maximum shift of said pen (3) on the X-coordinate axis and B is that of said pen (3) on the Y-coordinate axis, C is a desired size of character after normalization, Xt, Yt are coordinates of said pen (3) position on the axes of X and Y, respectively, Xmin, Ymin are the minimum value of the position of said pen (3) for writing one character on the X and Y axes, respectively, and X' and Y' are transformed coordinates after the normalization;

calculating circuit means for determining the gradient θ and the length L of a line segment in a stroke of a character by processing data on the pen position upon writing according to the following equation:

$$A=X'_t-X'_{t-1} \qquad (3)$$

$$B=Y'_t-Y'_{t-1} \qquad (4)$$

$$\text{Tan } \theta=B/A \qquad (5)$$

$$L=\sqrt{a^2+b^2} \qquad (6)$$

where $X'_t$, $X'_{t-1}$ are transformed X-coordinates taken at the time t, and t−1, respectively, and $Y'_t$, $Y'_{t-1}$ are also transformed Y-coordinates taken at times T and t−1;

determination means for extracting the identity of a stroke of a character by order of occurrence of θ and L of line segment(s) of a stroke;

character recognition circuit means for recognizing said character by combination in terms of the order of occurrence of the identities of strokes.

2. The character recognition apparatus of claim 1, wherein each said gradient θ of segment line of a stroke is classified into plural categories and a designation code is given to each of the gradient.

3. The character recognition apparatus of claim 1, wherein said length of a segment line of a stroke is classified into plural categories according to the normalizing size of a character to be recognized and is provided with a specific code for each category of line length.

**Patentansprüche**

1. Zeichenerkennungsvorrichtung, in der ein Zeichen, eine Ziffer oder eine Markierung, welche nachstehend als ein Zeichen bezeichnet wird, durch das Feststellen der Lage eines Schreibstiftes zum Schreiben auf eine Tafel erkannt wird, wobei der Stift eine Lage-Detektionsvorrichtung für drei Koordinatenachsen X, Y und Z hat, welche aufweist:

eine Detektionsschaltkreisvorrichtung (5, 6, 7) zum Feststellen der Initiierung und Vollendung der Bewegung des Stiftes (3) zum Schreiben eines Zeichens durch Detektieren einer Veränderung der Lage des Stiftes (3) auf der vertikalen Koordinaten-Z-Achse zu der oberfläche der Tafel (1) und durch Vergleichen der Trennung in der X—Y Ebene oder der verstrichenen Zeit verbunden mit aufeinanderfolgenden Veränderungen der Lage auf der Z-Achse mit Stufenwerten;

eine Zeichen-Größe Normierungsschaltkreisvorrichtung (9) zum Gleichmachen der Größe des geschriebenen Zeichens durch Verarbeiten der Daten der Stiftlage auf der Ebene (X und Y Ebene) entsprechend den folgenden Gleichungen:

$$X'=C\ (Xt-Xmin)/A \qquad (1)$$

$$Y'=C\ (Yt-Ymin)/B \qquad (2)$$

wobei A die Maximalverschiebung des Stiftes (3) auf der X-Koordinatenachse ist und B die des Stiftes (3) auf der Y-Koordinatenachse ist, C eine gewünschte Größe des Zeichens nach der Normierung ist, Xt, Yt Koordinaten der entsprechenden Stift (3)-Lage der Achsen von X und Y sind, Xmin, Ymin die entsprechenden Minimalwerte der Lage des Stiftes (3) zum Schreiben eines Zeichens auf der X und Y-Achse sind und X' und Y' transformierte Koordinaten nach der Normierung sind;

eine Rechen-Schaltkreisvorrichtung zum Bestimmen des Gradienten θ und der Länge L eines Zeilensegments in einem Strich eines Zeichens durch Verarbeiten der Daten der Stiftlage nach dem Schreiben entsprechend den fol-genden Gleichungen;

$$A=X'_t-X'_{t-1} \qquad (3)$$

$$B=Y'_t-Y'_{t-1} \qquad (4)$$

$$\text{Tan } \theta=B/A \qquad (5)$$

$$L=\sqrt{a^2+b^2} \qquad (6)$$

wobei $X'_t$, $X'_{t-1}$ transformierte X-Koordinaten sind, die entsprechend während der Zeit t und t−1 genommen wurden und $Y'_t$, $Y'_{t-1}$ auch trans-formierte Y-Koordinaten sind, welche während der Zeiten T und t−1 genommen wurden;

eine Bestimmungsvorrichtung zum Extrahieren der Gleichheit eines Striches eines Zeichens durch die Reihenfolge des Auftretens von θ und L des Zeilensegment(s) eines Striches;

eine Zeichen-Erkennungsschaltkreisvorrichtung zum Erkennen des Zeichens durch Kombination der Reihenfolge des Auftretens der Gleichheiten der Striche.

2. Zeichenerkennungsvorrichtung nach Anspruch 1, wobei jeder der Gradienten θ eines Zeilensegments eines Striches in mehrere Kategorien klassifiziert wird und ein Bestimmungscode zu jedem der Gradienten gegeben ist.

3. Zeichenerkennungsvorrichtung nach Anspruch 1, wobei die Länge eines Zeilensegments eines Striches in mehrere Kategorien klassifiziert ist entsprechend der Normierungsgröße eines Zeichens das erkannt wird und mit einem speziellen Code für jede Kategorie der Zeilenlänge versorgt wird.

## Revendications

1. Dispositif de reconnaissance de signe dans lequel un signe, que ce soit un chiffre ou une marque, ci-après nommé un signe, est reconnu en détectant la position d'un stylo pour écrire sur un tableau, ledit stylo ayant un dispositif de détection de position, en fonction de trois axes des coordonnées X, Y et Z, comprenant:

un dispositif de circuit de détection (5, 6, 7) pour détecter le début et la fin du mouvement dudit stylo (3) pour écrire un signe en détectant un changement de la position dudit stylo (3) sur l'axe des coordonnées vertical Z par rapport à la surface dudit tableau (1) et en comparant la séparation sur le plan X—Y ou le temps écoulé lié aux changements successifs de la position sur l'axe Z avec des valeurs de seuil;

un dispositif de circuit de normalisation de la taille d'un signe (9) pour égaliser les tailles des signes écrits en traitant les données des positions du stylo sur le plan (plan X et Y) conformément aux équations suivantes:

$$X° = C \ (Xt - Xmin)/A \qquad (1)$$

$$Y' = C \ (Yt - Ymin)/B \qquad (2)$$

A étant le décalage maximum dudit stylo (3) sur l'axe des coordonnées X et B étant celui dudit stylo (3) sur l'axe des coordonnées Y, C étant une taille de signe choisie après normalisation, Xt, Yt étant les coordonnées de ladite position du stylo (3) sur les axes X, respectivement Y, Xmin, Ymin étant les valeurs minimales de la position dudit stylo (3) pour écrire un signe sur les axes X, respectivement Y, et X' et Y' étant les coordonnées transformées après normalisation;

un dispositif de circuit de calcul pour déterminer le gradient θ et la longueur L d'un segment de ligne dans un trait d'un signe en traitant les données de la position du stylo après avoir écrit conformément aux équations suivantes:

$$A = X'_t - X'_{t-1} \qquad (3)$$

$$B = Y'_t - Y'_{t-1} \qquad (4)$$

$$\text{Tan } \theta = B/A \qquad (5)$$

$$L = \sqrt{a^2 + b^2} \qquad (6)$$

$X'_t$, $X'_{t-1}$ étant les coordonnées transformées de X prises au moment t, respectivement t−1, et $Y'_t$, $Y'_{t-1}$ étant aussi les coordonnées transformées d'Y prises aux moments t et t−1

un dispositif de détermination pour extraire l'identité d'un trait d'un signe par ordre d'apparition de θ et L du/des segment(s) de ligne d'un trait;

un dispositif de circuit de reconnaissance de signe pour reconnaître ledit signe en combinant l'ordre d'apparition des identités des traits.

2. Dispositif de reconnaissance de signe selon la revendication 1, chacun des gradients θ d'un segment de ligne d'un trait étant classé en plusieurs catégories et un code de désignation étant donnée à chacun des gradients.

3. Dispositif de reconnaissance de signe selon la revendication 1, la longueur d'un segment de ligne d'un trait étant classée en plusieurs catégories selon la taille de normalisation d'un signe à reconnaître et munie d'un code spécifique pour chaque catégorie de longueur de ligne.

FIG. 1

0 107 196

**FIG. 2**

**FIG. 3**

**FIG. 4a**

$$\theta = 5 \qquad \theta = 0$$
$$L = 3 \qquad L = 3$$

C 04

**FIG. 4b**

$$\theta = 6$$
$$L = 2$$

C 01

# FIG.5